# EUROPEAN PATENT APPLICATION

(11) **EP 4 344 215 A1**
(43) Date of publication of application: **27.03.2024**
(21) Application number: 22869007.9
(22) Date of filing: 26.08.2022
(51) Int. Cl.: H04N 21/234

(54) **VIDEO GENERATION METHOD AND APPARATUS, AND TERMINAL DEVICE AND STORAGE MEDIUM**

(30) Priority: 14.09.2021 CN 202111074707
(71) Applicant: Beijing Zitiao Network Technology Co., Ltd., Beijing 100190 (CN)
(72) Inventor: YU, Yajie, Beijing 100086 (CN); CHEN, Qian, Beijing 100086 (CN); SU, Zhiwei, Beijing 100086 (CN); LIN, Xin, Beijing 100086 (CN); JIANG, Wei, Beijing 100086 (CN)
(74) Representative: Dentons UK and Middle East LLP
(86) International application number: PCT/CN2022/115065
(87) International publication number: WO 2023/040633

(57) **Abstract**

Provided in the present disclosure are a video generation method and apparatus, and a device and a storage medium. The method comprises: first, acquiring the current input data of a photographing device (S101); on the basis of the current input data, determining an icon to be rendered (S102); then, rendering said icon on a target photographing picture, so as to obtain a photographing effect picture (S103); and generating a target video on the basis of the photographing effect picture (S104). According to the embodiments of the present disclosure, an icon to be rendered is determined on the basis of the current input data of a photographing device and said icon is automatically rendered into a target photographing picture, such that the effect of enriching the content of a video picture can be efficiently achieved.

## Description

The present application claims the priority of Chinese patent application No. 202111074707.3 titled "VIDEO GENERATING METHOD AND APPRATUS, AND TERMINAL DEVICE AND STORAGE MEDIUM" filed on September 14, 2021, the entirety of which is incorporated into the present application by reference.

### TECHNICAL FIELD

The present disclosure relates to the field of data processing, and in particular to a video generating method and apparatus, terminal device and storage medium.

### BACKGROUND

With the continuous development of short video technology, people are more and more interested in video creation. How to enrich a video creation picture and make video's content more vivid is the goal that the talent in video creation is pursuing.

Emoji icon, also known as visual emotion symbol, is the popular network expression at present. In the video editing stage, the talent in video creation enrich the content of a video picture in a way of manually adding Emoji icons to the video picture. However, the way of manually adding Emoji icons to the video picture is inefficient for enriching the content of the video picture.

### SUMMARY

In order to solve the above technical problem or at least partially solve the above technical problem, the embodiments of the present disclosure provide a video generating method, device, terminal device and storage medium, which can improve the efficiency in enriching content of video picture.

In the first aspect, the present disclosure provides a video generating method, which includes:
acquiring current input data of a camera; in which the current input data includes audio input data and/or image input data, the audio input data includes a preset duration of continuous audio frame data with a current input audio frame of the camera as the ending frame, and the image input data includes a preset number of continuous video frame pictures with a current capturing picture of the camera as the ending frame;
determining an icon to be rendered based on the current input data;
rendering the icon to be rendered on a target capturing picture to obtain a capturing effect picture; in which the target capturing picture includes the preset number of continuous video frame pictures with the current capturing picture of the camera as the starting frame;
generating a target video based on the capturing effect picture.

In the second aspect, the present disclosure provides a video generating apparatus, which includes an acquisition module, an acquisition module, a rendering module, and a video generating module.

The acquisition module is configured to acquire current input data of a camera; in which the current input data includes audio input data and/or image input data, the audio input data includes a preset duration of continuous audio frame data with a current input audio frame of the camera as the ending frame, and the image input data includes a preset number of continuous video frame pictures with a current capturing picture of the camera as the ending frame;
the determination module is configured to determine an icon to be rendered based on the current input data;
the rendering module is configured to render the icon to be rendered on a target capturing picture to obtain a capturing effect picture; in which the target capturing picture includes the preset number of continuous video frame pictures with the current capturing picture of the camera as the starting frame; and
the video generating module is configured to generate a target video based on the capturing effect picture.

In the third aspect, the present disclosure provides a computer-readable storage medium having stored instructions which, when executed on a terminal device, cause the terminal device to implement the above video generating method.

In the fourth aspect, the present disclosure provides a terminal device comprising a memory, a processor, and a computer program stored in the memory and executable on the processor, in which the computer program, when executed by the processor, implements the above video generating method.

In the fifth aspect, the present disclosure provides a computer program product comprising computer programs/instructions which, when executed by a processor, implement the above video generating method.

Compared with the prior art, the technical scheme provided by the embodiments of the present disclosure has at least advantages as follows.

The embodiments of the present disclosure provide a video generating method, which includes: firstly, acquiring current input data of a camera, and determining an icon to be rendered based on the current input data; then, rendering the icon to be rendered on a target capturing picture to obtain a capturing effect picture; and further, generating a target video based on the capturing effect picture. The embodiments of the present disclosure, by determining the icon to be rendered based on the current input data of the camera and automatically rendering the icon to be rendered to the target capturing picture, efficiently achieve the effect of enriching the content of video picture.

### BRIEF DESCRIPTION OF DRAWINGS

The accompanying drawings herein, which are incorporated in this specification and constitute a part thereof, illustrate embodiments consistent with the present disclosure and together with the specification, serve to explain the principles of the present disclosure.

In order to illustrate the technical scheme in the embodiments of the present disclosure or the prior art more clearly, the accompanying drawings needed to be used in the description of the embodiments or the prior art will be briefly introduced below. It is apparent for those ordinary skilled in the art that, other drawings can be further obtained according to these drawings without paying creative labor.
FIG. 1 is a flowchart of a video generating method provided by an embodiment of the present disclosure;
FIG. 2 is an example diagram 1 of a result of rendering an icon to be rendered on a target capturing picture provided by an embodiment of the present disclosure;
FIG. 3 is an example diagram 2 of a result of rendering an icon to be rendered on a target capturing picture provided by an embodiment of the present disclosure;
FIG. 4 is an example diagram of a video editing interface provided by an embodiment of the present disclosure;
FIG. 5 is an example diagram of a duration setting interface provided by an embodiment of the present disclosure;
FIG. 6 is an example diagram of an editing box of a target icon provided by an embodiment of the present disclosure;
FIG. 7 is an example diagram of a video recording interface of a camera provided by an embodiment of the present disclosure;
FIG. 8 is an example diagram of a pop-up window displaying permission application information provided by an embodiment of the present disclosure;
FIG. 9 is an example diagram of a target video generated by an embodiment of the present disclosure;
FIG. 10 is a structural schematic diagram of a video generating apparatus provided by an embodiment of the present disclosure; and
FIG. 11 is a structural schematic diagram of a terminal device provided by an embodiment of the present disclosure.

### DETAILED DESCRIPTION

In order to understand the above objectives, features and advantages of the present disclosure more clearly, the scheme of the present disclosure will be further described below. It should be noted that the embodiments of the present disclosure and the features in the embodiments can be combined with each other without conflict.

In the following description, many specific details are set forth in order to fully understand the present disclosure, but the present disclosure may be implemented in other ways than those described herein. Apparently, the embodiments in the specification are only part of the embodiments of the present disclosure, not all of the embodiments.

At present, in the video editing stage, a video creator can enrich the content of a video picture by manually adding Emoji icons to the video picture, so that the created content of video is more vivid. However, the way of manually adding Emoji icons is inefficient and affects the progress of video creation.

To this end, the embodiments of the present disclosure provide a video generating method, which comprises: firstly, acquiring current input data of a camera, and determining an icon to be rendered based on the current input data; then, rendering the icon to be rendered on a target capturing picture to obtain a capturing effect picture; and in turn generating a target video based on the capturing effect picture. It can be seen that, the embodiments of the present disclosure, by determining the icon to be rendered based on the current input data of the camera and automatically rendering the icon to be rendered to the target capturing picture, efficiently realize an effect of enriching the content of video picture.

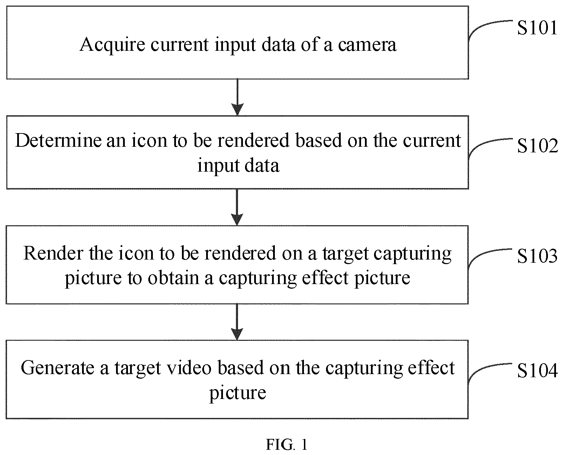

Based on this, an embodiment of the present disclosure provides a video generating method. Referring to FIG. 1, FIG. 1 is a flowchart of a video generating method provided by an embodiment of the present disclosure, and the method includes:

S101: acquiring current input data of a camera.

The current input data includes audio input data and/or image input data, the audio input data includes a preset duration of continuous audio frame data with a current input audio frame of the camera as the ending frame, and the image input data includes a preset number of continuous video frame pictures with a current capturing picture of the camera as the ending frame.

Both the preset duration and the preset number may be set in advance. For example, the preset duration may be set to 1 second or 3 seconds, and the preset number may be set to 1 frame, 5 frames, and so on.

In the embodiment of the present disclosure, the audio input data may be a background music selected when recording a video is by the camera, or may be what a user says when recording a video, which is not limited by the present disclosure. The camera may be a video capturing tool provided by an application program with a video recording function. The application program may be installed on a terminal device such as smart phone, tablet computer, etc.

Exemplarily, assuming that the current input data includes the audio input data, and the preset duration is 3 seconds, if the current background music has not been played to the 3rd second, for example, the current background music has been played to the 2nd second, the acquired audio input data is the continuous audio frame data of the background music within the period from the 0th second to the 2nd second; or if the current background music has been played for more than 3 seconds, for example, the current background music has been played to the 5th second, the acquired audio input data is the continuous audio data of the background music within the period from the 2nd second to the 5th second.

Exemplarily, assuming that the current input data includes the image input data, if the preset number is 1, a screenshot of the current capturing picture may be acquired as the image input data, or if the preset number is 3, the screenshots of the first three frames of capturing pictures including the current capturing picture may be acquired as the image input data.

In an optional implementation, the audio input data and/or image input data of the camera may be acquired as the current input data of the camera, in a video recording scenario or capturing picture previewing scenario of the camera.

Generally, when a user is recording a video, the camera needs to be turned on for recording the video. After the user turns on the camera, there will be shown a preview interface, on which a capturing button is displayed. The recording of the video will start once the user clicks on the capturing button, and the preview interface will be shown until the user clicks on the capturing button. In the embodiment of the present disclosure, before starting recording, the audio input data and/or image input data in the capturing picture previewing scenario may be acquired as the current input data of the camera, and after the user clicks the capturing button to start recording the video, the audio input data and/or image input data during the process of video recording may be continued to be acquired as the current input data of the camera.

S102: determining an icon to be rendered based on the current input data.

In the embodiment of the present disclosure, a prediction model for rendering icons may be trained in advance, the acquired current input data may be input into the prediction model, and then a corresponding icon to be rendered may be output by the prediction model.

It should be noted that corresponding prediction models may be trained with respect to the audio input data and the image input data respectively, for prediction of rendered icons, or one prediction model may be jointly trained to predict rendered icons for both the audio input data and the image input data, which is not limited by the present disclosure.

In the embodiment of the present disclosure, the icons to be rendered are not limited to Emoji icons, but may also be extended to other icons, which is not limited by the present disclosure. Emoji icons include various types of icons, including smiling face and emotion class icons, human and body class icons, skin color and hairstyle class icons, animal and nature class icons, food and drink class icons, travel and place class icons, activity class icons, item class icons, symbol class icons and flag class icons. The smiling face and emotion class icons include smiling faces, expression faces, tongue sticking out faces, faces with hands, sleeping faces, sick faces, worried faces, negative faces, cat faces, monkey faces, emotion class icons, etc.; the human and body class icons include palm spreading icons, one-finger icons, hand action icons, body icons, character icons, character gesture icons, character role icons, fictional character icons, character activity icons, character motion icons, character rest icons, family class icons, etc.; the skin color and hairstyle class icons include skin color icons and hairstyle icons; the animal and natural class icons include mammal class icons, bird class icons, reptile class icons, marine animal class icons, insect class icons, flower icons and other plant icons; the food and drink class icons include fruit and vegetable class icons, cooked food class icons, drink class icons, tableware class icons, etc.; the travel and place class icons include architectural icons, landway traffic icons, waterway traffic icons, etc.; the activity class icons include sports class icons, game class icons, etc.; the item class icons include clothing class icons, musical instrument class icons, office class icons, etc.; and the symbol class icons include constellation class icons, function identification class icons, etc.

Exemplarily, assuming that the acquired audio input data is "I'm going to ski tomorrow", it may be determined, based on the audio input data, that the icon to be rendered is a skiing icon.

Exemplarily, assuming that the acquired image input data is that the person in the capturing picture is sticking tongue out, it may be determined, based on the image input data, that the icon to be rendered is a tongue sticking out icon.

S103: rendering the icon to be rendered on a target capturing picture to obtain a capturing effect picture.

The target capturing picture includes the preset number of continuous video frame pictures with the current capturing picture of the camera as the starting frame.

The preset number may be set in advance. For example, the preset number may be set to 3 frames, 5 frames, etc.

In the embodiment of the present disclosure, when the icon to be rendered is being rendered on the target capturing picture, the rendering may be carried out in different ways.

Exemplarily, the icon to be rendered may be pasted in the target capturing picture in the form of a sticker. In the capturing effect picture rendered in this way, the target capturing picture and the icon to be rendered are independent

Exemplarily, the icon to be rendered and the target capturing picture may be rendered as a whole. In the capturing effect picture rendered in this way, the target capturing picture and the icon to be rendered are united as one.

S 104: generating a target video based on the capturing effect picture.

In the embodiment of the present disclosure, the above steps may be employed to determine associated icons to be rendered in the whole process of video recording, render the icons to be rendered on a target capturing picture to obtain a capturing effect picture, and in turn generate a target video based on each of the rendered capturing effect pictures. As a result, the generated target video not only contains the capturing pictures, but also contains the rendered icons recommended according to the capturing pictures and the audio appearing in the process of video recording. Thus the embodiment enriches the contents of the video pictures, realizes automatic recommending of suitable icons in the process of video recording, without requiring the user to manually add icons in the process of video editing, which not only improves the interest of video creation, but also improves the efficiency of icon addition and saves the cost of video production.

The video generating method of the embodiment of the present disclosure comprises: firstly, acquiring current input data of a camera, and determining an icon to be rendered based on the current input data; then, rendering the icon to be rendered on a target capturing picture to obtain a capturing effect picture; and in turn generating a target video based on the capturing effect picture. The embodiments of the present disclosure, by determining the icon to be rendered based on the current input data of the camera and automatically rendering the icon to be rendered to the target capturing picture, efficiently realize an effect of enriching the content of video picture.

In an optional implementation, the current input data includes the audio input data, and the determining an icon to be rendered based on the current input data includes:

performing speech recognition on the audio input data to obtain a speech recognition result;

inputting the speech recognition result into the first recommendation model, and outputting, after processing by the first recommendation model, an icon corresponding to the audio input data;

determining the icon to be rendered based on the icon corresponding to the audio input data.

The first recommendation model may be trained in advance. A large number of speech recognition texts may be collected and marked with rendered icons to be training samples. The initial neural network model may be trained to obtain a trained first recommendation model, for predicting matching icons according to speech recognition results.

In the embodiment of the present disclosure, for the acquired audio input data, the existing speech recognition algorithms may be employed to perform speech recognition on the audio input data to obtain the speech recognition result, the speech recognition result is then input into the trained first recommendation model for processing, and the icon corresponding to the audio input data is output by the first recommendation model, so that the icon may be determined as the icon to be rendered.

In an optional implementation, the current input data includes the image input data, and the determining an icon to be rendered based on the current input data includes:
extracting expression features and/or limb movement features from the image input data;
inputting the expression features and/or limb movement features into the second recommendation model, and outputting, after processing by the second recommendation model, an icon corresponding to the image input data; and
determining the icon to be rendered based on the icon corresponding to the image input data.

The second recommendation model may be trained in advance. A large number of expression features and/or limb movement features may be collected and marked with rendered icons to be training samples. The initial neural network model may be trained to obtain a trained second recommendation model, for predicting matching icons according to expression features and/or limb movement features.

In the embodiment of the present disclosure, for the acquired image input data, the relevant expression extraction algorithms may be employed to extract the expression features from the image input data, and/or the relevant limb movement recognition algorithms may be employed to extract the limb movement features from the image input data, the extracted expression features and/or limb movement features are then input into the trained second recommendation model for processing, and the icon that is matched with the image input data may be output by the second recommendation model, so that the icon may be determined as the icon to be rendered.

Optionally, considering that icons in an icon library set in the application program may change over time, for example, a same icon becomes more beautiful, the action amplitude of a same action icon changes, and so on, so that the icons output by the first recommendation model and/or the second recommendation model cannot be completely matched with the icons in the icon library. In this case, if the icons output by the first recommendation model and/or the second recommendation model are used as icons to be rendered, it may be impossible to obtain icons that satisfy the user. For this case, according to the icons output by the first recommendation model and/or the second recommendation model, an icon that is most similar to the icons may be matched from the icon library as the icon to be rendered, so that the rendered icon in the target capturing picture is matched with the icon in the icon library, and the user's satisfaction with the rendered icon is improved.

It should be noted that the first recommendation model and the second recommendation model in the embodiment of the present disclosure may be the recommendation models installed locally on the terminal device together with the installation package of the application program, or may be the recommendation models deployed in the server corresponding to the application program, which is not limited by the present disclosure.

In an optional implementation, the current input data includes both the audio input data and the image input data, and the determining an icon to be rendered based on the current input data includes:
determining icons respectively corresponding to the audio input data and the image input data; and
deduplicating the icons respectively corresponding to the audio input data and the image input data to obtain the icon to be rendered.

In the process of video recording, the user may describe an action in language while doing it. For example, the user shouts "Come on! Come on!" while doing a cheer-up action. In this case, the same icons may be obtained according to the acquired audio input data and image input data. If both the icon matched with the audio input data and the icon matched with the image input data are rendered in the target capturing picture, two identical icons will appear in the target capturing picture, resulting in icon duplication, and affecting user's visual experience. In view of this phenomenon, in the embodiment of the present disclosure, the icons respectively corresponding to the determined audio input data and image input data may be deduplicated, and only one icon is retained as the icon to be rendered after deleting a duplicate icon, avoiding rendering identical icons in the target capturing picture, and simplifying the video picture.

In an optional implementation, before rendering the icon to be rendered on the target capturing picture, the rendering parameter values corresponding to the icon to be rendered may be determined first; in which the rendering parameter values include rendering position coordinates, rendering icon size, rendering angle and/or rendering time. Correspondingly, the rendering the icon to be rendered on a target capturing picture to obtain a capturing effect picture comprises: rendering, based on the rendering parameter values, the icon to be rendered on the target capturing picture to obtain a capturing effect picture.

Exemplarily, the rendering position coordinates may be set to different rendering position coordinates according to different current input data. Specifically, when the current input data is the audio input data, the rendering position coordinates may be arbitrary position coordinates in the target capturing picture except the area where the human face is located, for example, blank areas such as the upper left corner and the upper right corner of the target capturing picture. A face recognition algorithms may be utilized to recognize a human face in the capturing picture, a range of human face area may be determined, and then the range of human face area may be avoided when determining the rendering position coordinates, so as to prevent the rendered icon from masking the human face in the picture. When the current input data is the image input data, the rendering position coordinates may be determined according to the position coordinates of the expression features and/or limb movement features in the image input data. The rendering position coordinates may be near the position coordinates of the expression features and/or limb movement features, that is, when the current input data is the image input data, the icon to be rendered is rendered as close as possible to the corresponding expression and/or limb movement.

Exemplarily, the rendering icon size, the rendering angle, and the rendering time may take a preset size, a preset angle, and a preset rendering duration. The preset size, the preset angle and the preset rendering duration may be configured by the system, or may be set by the users themselves, which is not limited by the present disclosure.

In the embodiment of the present disclosure, according to the determined rendering parameter values corresponding to the icon to be rendered, the icon to be rendered can be rendered on the target capturing picture to obtain the capturing effect picture.

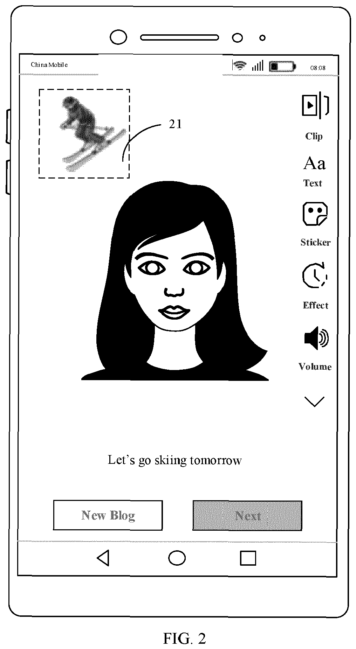

FIG. 2 is an example diagram 1 of a result of rendering an icon to be rendered on a target capturing picture provided by an embodiment of the present disclosure. FIG. 2 illustrates a frame of picture in the rendered capturing effect pictures. As illustrated in FIG. 2, in the case where the user says "let's go skiing tomorrow" when recording a video, then according to the audio data, the icon to be rendered may be matched as "skiing", and the icon may be rendered in the video picture according to the rendering position coordinates, the rendering icon size, the rendering angle and the rendering time, as indicated by reference numeral 21 in FIG. 2.

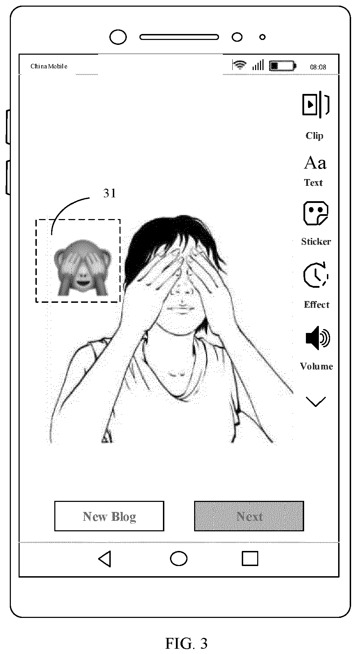

FIG. 3 is an example diagram 2 of a result of rendering an icon to be rendered on a target capturing picture provided by an embodiment of the present disclosure. FIG. 3 shows a frame of picture in the rendered capturing effect pictures. As illustrated in FIG. 3, in the case where the user makes an action of covering eyes when recording a video, then according to the image data, the icon to be rendered may be matched as "covering eyes", and the rendering position coordinates of the icon may be determined according to the position of the user's action of covering eyes in the image, for example, the rendering position coordinates are determined to be the left side of the human face, and in turn the icon may be rendered in the video picture according to the rendering position coordinates, the rendering icon size, the rendering angle and the rendering time, as indicated by reference numeral 31 in FIG. 3.

In an optional implementation, for the generated target video, the target video may be played on a video editing interface. Moreover, an editing track corresponding to a target icon on the playing picture in the target video is displayed in response to a selecting operation for the target icon; and the rendering time of the target icon is adjusted based on the editing track.

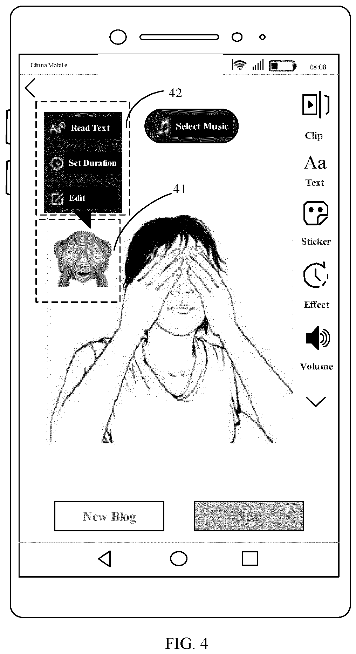

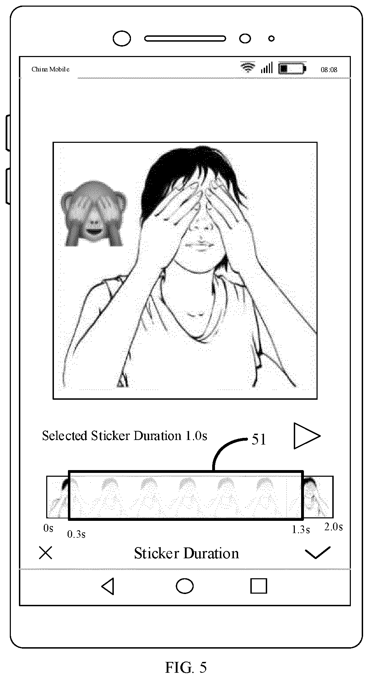

FIG. 4 is an example of a video editing interface provided by an embodiment of the present disclosure. As illustrated in FIG. 4, a target video is being played in the video editing interface. An eye covering icon is illustrated in the video, and the eye covering icon is the icon indicated by reference numeral 41 in FIG. 4. When the user clicks on the icon indicated by reference numeral 41, a corresponding editing track is displayed near the icon, as indicated by reference numeral 42 in FIG. 4. As can be seen from FIG. 4, the editing track includes "Read Text", "Set Duration" and "Edit". The audio input data corresponding to the icon can be read aloud by clicking on "Read Text". The duration of the icon can be set by "Set Duration". By "Edit", the position of the icon, the size of the icon and the angle of the icon can be adjusted, and the icon can be deleted. When the user clicks on "Set Duration", a duration setting interface as illustrated in FIG. 5 is entered, in which the user can set the duration of the icon indicated by reference numeral 41.

As illustrated in FIG. 5, in the duration setting interface, the target video is paused. A sticker duration setting window is displayed in FIG. 5, as indicated by reference numeral 51. The user may set the duration of the icon indicated by reference numeral 41 by adjusting the sticker duration setting window. As illustrated in FIG. 5, the sticker duration setting window is from 0.3th second (in FIG. 5, second is denoted by S) to 1.3th second of the target video, that is, the duration of the icon indicated by reference numeral 41 is set to 1 second, and the prompt information of "Selected Sticker Duration 1.0s" is displayed in the duration setting interface.

In the embodiment of the present disclosure, a target video is played on a video editing interface, and an editing track corresponding to a target icon on a playing picture in the target video is displayed in response to a selecting operation for the target icon, and in turn rendering time of the target icon is adjusted based on the editing track, so that the user can set the display duration of the icon by himself/herself as required, realizing flexible adjustment of the display duration of the icon.

In an optional implementation, when the target video is played on the video editing interface, the user may further perform a preset operation on the selected target icon, thereby adjusting the rendering position coordinates, the rendering icon size and/or the rendering angle of the target icon in response to the preset operation for the target icon on the playing picture.

The preset operation may be scaling operation, rotating operation and dragging operation on the target icon. The rendering icon size of the target icon can be adjusted by scaling operation, the rendering angle of the target icon can be adjusted by rotating operation, and the rendering position coordinates of the target icon can be adjusted by dragging operation.

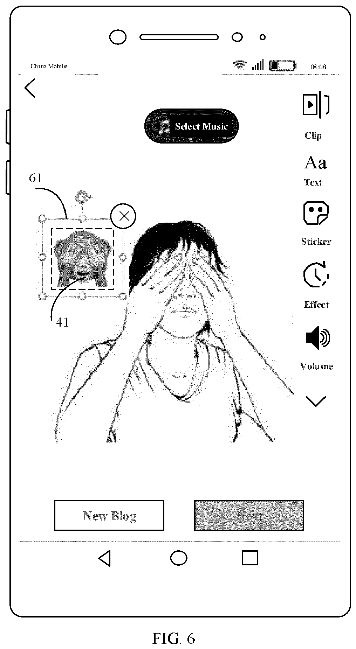

Exemplarily, the user may click on "Edit" in the editing track indicated by reference numeral 42 in FIG. 4, and afterwards, an editing box is displayed on the periphery of the target icon indicated by reference numeral 41, as illustrated in FIG. 6. The box indicated by reference numeral 61 is the editing box of the target icon. By performing scaling operation on any edge of the editing box indicated by reference numeral 61, the size of the target icon indicated by reference numeral 41 can be adjusted. By performing rotating operation on the editing box indicated by reference numeral 61, the angle of the target icon indicated by reference numeral 41 can be adjusted. By performing dragging operation on the editing box indicated by reference numeral 61, the position of the target icon indicated by reference numeral 41 can be adjusted. Additionally, as illustrated in FIG. 6, a deletion symbol "X" is also displayed in the upper right corner of the editing box. By clicking this deletion symbol, the target icon indicated by reference numeral 41 can be deleted.

In the embodiment of the present disclosure, the rendering position coordinates, the rendering icon size and/or the rendering angle of the target icon are adjusted in response to the preset operation for the target icon on the playing picture, thereby realizing flexible adjustment of the rendering icon and increasing the interest of video production.

With people's attention to personal information security, the users usually want to protect their own information in terms of various aspects, whereas the automatic recommendation of rendering icons requires to acquire the audio input data and image input data when recording the video by the users. In order to let user learn of the situation, in an optional implementation of the present disclosure, before the acquiring current input data of a camera, the user authorization information for the current input data of the camera may be acquired first, and then an icon recommending function can be turned on only after acquiring the authorization, and in turn the current input data can be acquired to determine the icon to be rendered.

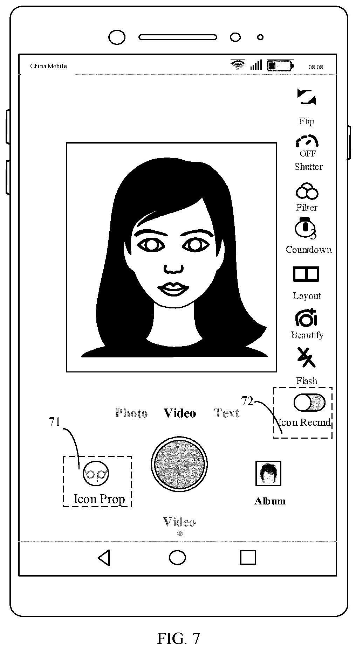

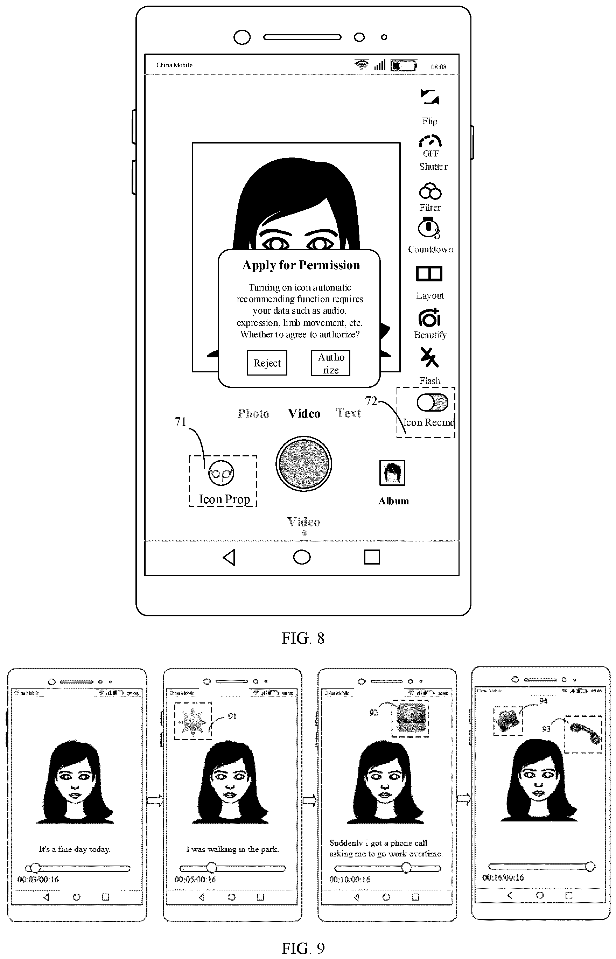

Exemplarily, FIG. 7 is an example diagram of a video recording interface of a camera provided by an embodiment of the present disclosure. As illustrated in FIG. 7, an icon prop column is displayed in the video recording interface, as indicated by reference numeral 71 in FIG. 7. When the user clicks on the icon prop column, permission application information is displayed in the form of a pop-up window, as illustrated in FIG. 8. The permission application information is used to apply for permission to acquire the user's data such as audio, action and expression. In the case where the user selects "Authorize", the icon recommending function is turned on, as indicated by reference numeral 72 in FIG. 7. After the icon recommending function is turned on, the current input data of the camera may be acquired for icon recommendation.

Exemplarily, the icon recommending function indicated by reference numeral 72 is in off state by default (the circle is on the left). When the user clicks on "Icon Recmd", a pop-up window as illustrated in FIG. 8 is displayed to apply for permission to acquire the user's data such as audio, action and expression. If the user selects "Authorize", the icon recommending function is switched from off state to on state (the circle is on the right), and afterwards, the current input data of the camera may be acquired for icon recommendation.

FIG. 9 is an example diagram of a target video generated by an embodiment of the present disclosure. In the process of capturing the video, the user said the following words in total: "It's a fine day today. I was walking in the park. Suddenly I got a phone call asking me to go work overtime." According to "It's a fine day today", the icon to be rendered is determined to include a sun icon, and the sun icon will be displayed in the subsequent video picture, as indicated by reference numeral 91. The video picture showing the sun icon corresponds to the audio data "I was walking in the park", according to which the icon to be rendered is determined to be a park icon, and the park icon is displayed in the subsequent video picture, as indicated by reference numeral 92. According to the audio data "Suddenly I got a phone call asking me to go work overtime", the icon to be rendered is determined to be a phone icon and a work icon, and the phone icon and work icon are displayed in the video picture, as indicated by reference numerals 93 and 94. It can be seen that it takes a certain time to match the icon to be rendered and render the icon in the capturing picture, so the display of icons will be delayed compared with the audio data.

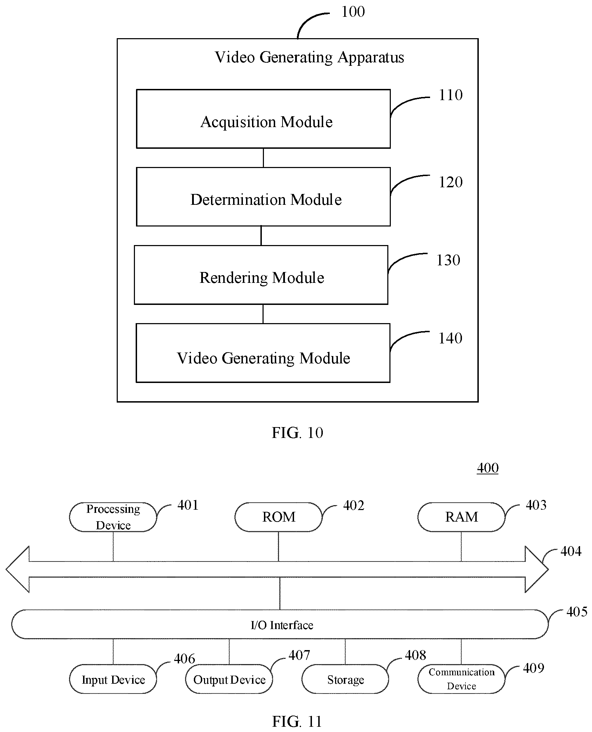

Based on the above method embodiment, the present disclosure further provides a video generating apparatus. Referring to FIG. 10, FIG. 10 is a structural schematic diagram of a video generating apparatus provided by an embodiment of the present disclosure. The video generating apparatus 100 includes an acquisition module 110, a determination module 120, a rendering module 130, and a video generating module 140.

The acquisition module 110 is configured to acquire current input data of a camera. The current input data includes audio input data and/or image input data, the audio input data includes a preset duration of continuous audio frame data with a current input audio frame of the camera as the ending frame, and the image input data includes a preset number of continuous video frame pictures with a current capturing picture of the camera as the ending frame.

The determination module 120 is configured to determine an icon to be rendered based on the current input data.

The rendering module 130 is configured to render the icon to be rendered on a target capturing picture to obtain a capturing effect picture; in which the target capturing picture includes the preset number of continuous video frame pictures with the current capturing picture of the camera as the starting frame.

The video generating module 140 is configured to generate a target video based on the capturing effect picture.

In an optional implementation, the acquisition module 110 is specifically used for acquiring the audio input data and/or image input data of the camera as the current input data of the camera, in a video recording scenario or capturing picture previewing scenario of the camera.

In an optional implementation, the current input data includes the audio input data, and the determination module 120 is specifically configured to:
perform a speech recognition on the audio input data to obtain a speech recognition result;
input the speech recognition result into a first recommendation model, and output, after the processing by the first recommendation model, an icon corresponding to the audio input data; and
determine the icon to be rendered based on the icon corresponding to the audio input data.

In an optional implementation, the current input data includes the image input data, and the determination module 120 is specifically configured to:
extract expression features and/or limb movement features from the image input data;
input the expression features and/or limb movement features into a second recommendation model, and output, after the processing by the second recommendation model, an icon corresponding to the image input data; and
determine the icon to be rendered based on the icon corresponding to the image input data.

In an optional implementation, the current input data includes both the audio input data and the image input data, and the determination module 120 is specifically configured to:
determine icons respectively corresponding to the audio input data and the image input data;
de-duplicate the icons respectively corresponding to the audio input data and the image input data to obtain the icon to be rendered.

In an optional implementation, the video generating apparatus 100 further includes a rendering parameter determination module.

The rendering parameter determination module is configured to determine rendering parameter values corresponding to the icon to be rendered; in which the rendering parameter values include rendering position coordinates, rendering icon size, rendering angle and/or rendering time.

Correspondingly, the rendering module 130 is specifically configured to:
render, based on the rendering parameter values, the icon to be rendered on the target capturing picture to obtain a capturing effect picture.

In an optional implementation, the video generating apparatus 100 further comprises a video playing module, a display module, and a time adjustment module.

The video playing module is configured to play the target video on a video editing interface.

The display module is configured to display an editing track corresponding to a target icon on a playing picture in the target video in response to a selecting operation for the target icon.

The time adjustment module is configured to adjust the rendering time of the target icon based on the editing track.

In an optional implementation, the video generating apparatus 100 further comprises a parameter adjustment module.

The parameter adjustment module is configured to adjust the rendering position coordinates, the rendering icon size, and/or the rendering angle of the target icon in response to a preset operation for the target icon on the playing picture.

In an optional implementation, the video generating apparatus 100 further comprises an authorization acquisition module.

The authorization acquisition module is configured to acquire user authorization information for the current input data of the camera.

The video generating apparatus provided by the embodiment of the present disclosure can perform the video generating method provided by any embodiment of the present disclosure, and has corresponding functional modules and beneficial effects for performing the method.

In addition to the above methods and devices, the embodiments of the present disclosure further provide a computer-readable storage medium having stored instructions which, when executed on a terminal device, cause the terminal device to implement the video generating method described in the embodiments of the present disclosure.

The embodiments of the present disclosure further provides a computer program product comprising computer programs/instructions which, when executed by a processor, implement the video generating method described in the embodiments of the present disclosure.

FIG. 11 is a structural schematic diagram of a terminal device provided by an embodiment of the present disclosure.

Referring to FIG. 11, FIG. 11 shows a schematic diagram of a structure suitable for implementing a terminal device 400 in the embodiments of the present disclosure. The terminal device 400 in the embodiments of the present disclosure may include, but is not limited to, mobile terminal such as mobile phone, notebook computer, digital broadcast receiver, PDA (personal digital assistant), PAD (portable android device (tablet)), PMP (portable media player), vehicle-mounted terminal (e.g., vehicle navigation terminal), etc., and stationary terminal such as digital TV (television), desktop computer, etc. The terminal device illustrated in FIG. 11 is merely an example, and should not bring any limitation to the functions and application scope of the embodiments of the present disclosure.

As illustrated in FIG. 11, the terminal device 400 may include a processing device (e.g., central processing unit, graphics processor, etc.) 401, which may perform various appropriate actions and processes according to a program stored in a read-only memory (ROM) 402 or a program loaded from a storage 408 into a random access memory (RAM) 403. In the RAM 403, various programs and data required for the operations of the terminal device 400 are also stored. The processing device 401, the ROM 402 and the RAM 403 are connected to each other through a bus 404. An input/output (I/O) interface 405 is also connected to the bus 404.

Generally, the following devices may be connected to the I/O interface 405: an input device 406 including, for example, touch screen, touch pad, keyboard, mouse, camera, microphone, accelerometer, gyroscope, etc.; an output device 407 including, for example, liquid crystal display (LCD), speaker, vibrator, etc.; a storage 408 including, for example, magnetic tape, hard disk, etc.; and a communication device 409. The communication device 409 may allow the terminal device 400 to perform wireless or wired communication with other equipment to exchange data. Although FIG. 11 shows a terminal device 400 with various devices, it should be understood that it is not required to implement or provide all the devices shown. Alternatively, more or less devices may be implemented or provided.

In particular, according to an embodiment of the present disclosure, the process described above with reference to the flowchart can be implemented as a computer software program. For example, an embodiment of the present disclosure includes a computer program product comprising a computer program carried on a non-transient computer-readable medium, in which the computer program contains program code for performing the method illustrated in the flowchart. In such an embodiment, the computer program can be downloaded and installed from the network through the communication device 409, or installed from the storage 408 or from the ROM 402. The computer program, when executed by the processing device 401, performs the above functions defined in the video generating method of the embodiments of the present disclosure.

It should be noted that the above computer-readable medium in the present disclosure may be a computer-readable signal medium or a computer-readable storage medium or any combination of both. The computer-readable storage medium may be, for example, but not limited to, an electrical, magnetic, optical, electromagnetic, infrared, or semiconductor system, device or device, or any combination thereof. More specific examples of computer-readable storage media may include, but are not limited to, electrical connection with one or more wires, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination thereof. In the present disclosure, computer-readable storage medium may be any tangible medium containing or storing a program, which may be used by or in conjunction with an instruction execution system, device or device. In the present disclosure, computer-readable signal medium may include data signals propagated in baseband or as part of a carrier wave, in which computer-readable program code is carried. Such propagated data signal may take many forms, including but not limited to electromagnetic signal, optical signal or any suitable combination thereof. Computer-readable signal medium may also be any computer-readable medium other than a computer-readable storage medium, and the computer-readable signal medium may send, propagate or transmit a program for use by or in conjunction with an instruction execution system, device or device. The program code contained in the computer-readable medium may be transmitted by any appropriate medium, including but not limited to: wire, optical cable, RF (radio frequency) and the like, or any suitable combination thereof.

In some embodiments, a client or server may communicate by utilizing any currently known or future developed network protocol such as HTTP (HyperText Transfer Protocol), and may be interconnected with digital data communication in any form or medium (e.g., communication network). Examples of communication networks include local area network ("LAN"), wide area network ("WAN"), network of network (e.g., Internet) and end-to-end network (e.g., ad hoc end-to-end network), as well as any currently known or future developed network.

The above computer-readable medium may be included in the above terminal device, or may exist separately without being assembled into the terminal device.

The above computer-readable medium carries one or more programs which, when executed by the terminal device, cause the terminal device to perform as follows: acquiring current input data of a camera; in which the current input data includes audio input data including a preset duration of continuous audio frame data with a current input audio frame of the camera as the ending frame and/or image input data including a preset number of continuous video frame pictures with a current capturing picture of the camera as the ending frame; determining an icon to be rendered based on the current input data; rendering the icon to be rendered on a target capturing picture to obtain a capturing effect picture; in which the target capturing picture includes the preset number of continuous video frame pictures with the current capturing picture of the camera as the starting frame; generating a target video based on the capturing effect picture.

The computer program code for performing the operations of the present disclosure may be written in one or more programming languages or a combination thereof, including but not limited to object-oriented programming language, such as Java, Smalltalk, C++, etc., and conventional procedural programming language, such as "C" language or the like. The program code can be completely executed on a user computer, partially executed on the user computer, executed as an independent software package, partially executed on the user computer and partially executed on a remote computer, or completely executed on a remote computer or server. In the case involving a remote computer, the remote computer may be connected to the user computer through any kind of network, including local area network (LAN) or wide area network (WAN), or may be connected to an external computer (e.g., through the Internet using an Internet service provider).

The flowcharts and block diagrams in the accompanying drawings illustrate architectures, functions and operations of possible implementations of systems, methods and computer program products according to various embodiments of the present disclosure. In this regard, each block in the flowcharts or block diagrams may represent a module, a program segment, or a part of code that contains one or more executable instructions for implementing specified logical functions. It should also be noted that, in some alternative implementations, the functions noted in the blocks may occur in a different order than those noted in the drawings. For example, two blocks illustrated in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, may be implemented by a dedicated hardware-based system that performs specified functions or operations, or by a combination of dedicated hardware and computer instructions.

The involved units described in the embodiments of the present disclosure may be implemented either in software or in hardware. The name of unit does not limit the unit itself in some case.

The functions described above herein may be at least partially performed by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, machine-readable medium may be tangible medium, which may contain or store a program for use by or in conjunction with an instruction execution system, device or equipment. The machine-readable medium may be machine-readable signal medium or machine-readable storage medium. The machine-readable medium may include, but is not limited to, an electronic, magnetic, optical, electromagnetic, infrared, or semiconductor system, device or equipment, or any suitable combination thereof. More specific examples of machine-readable storage medium may include electrical connection based on one or more wires, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination thereof.

According to one or more embodiments of the present disclosure, the present disclosure provides a video generating method, which comprises:
acquiring current input data of a camera; in which the current input data includes audio input data and/or image input data, the and/or image input data includes a preset duration of continuous audio frame data with a current input audio frame of the camera as the ending frame, and the image input data includes a preset number of continuous video frame pictures with a current capturing picture of the camera as the ending frame;
determining an icon to be rendered based on the current input data;
rendering the icon to be rendered on a target capturing picture to obtain a capturing effect picture; in which the target capturing picture includes the preset number of continuous video frame pictures with the current capturing picture of the camera as the starting frame; and
generating a target video based on the capturing effect picture.

According to one or more embodiments of the present disclosure, in the video generating method provided by the present disclosure, the acquiring current input data of a camera comprises:
acquiring the audio input data and/or image input data of the camera as the current input data of the camera, in a video recording scenario or capturing picture previewing scenario of the camera.

According to one or more embodiments of the present disclosure, in the video generating method provided by the present disclosure, the current input data includes the audio input data, and the determining an icon to be rendered based on the current input data includes:
performing a speech recognition on the audio input data to obtain a speech recognition result;
inputting the speech recognition result into a first recommendation model, and outputting, after processing by the first recommendation model, an icon corresponding to the audio input data; and
determining the icon to be rendered based on the icon corresponding to the audio input data.

According to one or more embodiments of the present disclosure, in the video generating method provided by the present disclosure, the current input data includes the image input data, and the determining an icon to be rendered based on the current input data includes:
extracting expression features and/or limb movement features from the image input data;
inputting the expression features and/or limb movement features into a second recommendation model, and outputting, after processing by the second recommendation model, an icon corresponding to the image input data; and
determining the icon to be rendered based on the icon corresponding to the image input data.

According to one or more embodiments of the present disclosure, in the video generating method provided by the present disclosure, the current input data includes both the audio input data and the image input data, and the determining an icon to be rendered based on the current input data includes:
determining icons respectively corresponding to the audio input data and the image input data; and
de-duplicating the icons respectively corresponding to the audio input data and the image input data to obtain the icon to be rendered.

According to one or more embodiments of the present disclosure, in the video generating method provided by the present disclosure, before the rendering the icon to be rendered on a target capturing picture to obtain a capturing effect picture, the method further comprises:
determining rendering parameter values corresponding to the icon to be rendered; in which the rendering parameter values include rendering position coordinates, rendering icon size, rendering angle and/or rendering time.

Correspondingly, the rendering the icon to be rendered on a target capturing picture to obtain a capturing effect picture comprises:
rendering, based on the rendering parameter values, the icon to be rendered on the target capturing picture to obtain a capturing effect picture.

According to one or more embodiments of the present disclosure, in the video generating method provided by the present disclosure, after the generating a target video based on the capturing effect picture, the method further comprises:
playing the target video on a video editing interface;
displaying an editing track corresponding to a target icon on a playing picture in the target video in response to a selecting operation for the target icon; and
adjusting the rendering time of the target icon based on the editing track.

According to one or more embodiments of the present disclosure, in the video generating method provided by the present disclosure, the method further comprises:
adjusting the rendering position coordinates, the rendering icon size and/or the rendering angle of the target icon in response to a preset operation for the target icon on the playing picture.

According to one or more embodiments of the present disclosure, in the video generating method provided by the present disclosure, before the acquiring current input data of a camera, the method further comprises:
acquiring user authorization information for the current input data of the camera.

According to one or more embodiments of the present disclosure, the present disclosure provides a video generating apparatus, which comprises an acquisition module, a determination module, a rendering module, and a video generating module.

The acquisition module is used for acquiring current input data of a camera; in which the current input data includes audio input data including a preset duration of continuous audio frame data with a current input audio frame of the camera as the ending frame and/or image input data including a preset number of continuous video frame pictures with a current capturing picture of the camera as the ending frame.

The determination module is used for determining an icon to be rendered based on the current input data.

The rendering module is used for rendering the icon to be rendered on a target capturing picture to obtain a capturing effect picture; in which the target capturing picture includes the preset number of continuous video frame pictures with the current capturing picture of the camera as the starting frame.

The video generating module is used for generating a target video based on the capturing effect picture.

According to one or more embodiments of the present disclosure, in the video generating apparatus provided by the present disclosure, the acquisition module is specifically used for: acquiring the audio input data and/or image input data of the camera as the current input data of the camera, in a video recording scenario or capturing picture previewing scenario of the camera.

According to one or more embodiments of the present disclosure, in the video generating apparatus provided by the present disclosure, the current input data includes the audio input data, and the determination module is specifically used for:
performing speech recognition on the audio input data to obtain a speech recognition result;
inputting the speech recognition result into a first recommendation model, and outputting, after processing by the first recommendation model, an icon corresponding to the audio input data; and
determining the icon to be rendered based on the icon corresponding to the audio input data.

According to one or more embodiments of the present disclosure, in the video generating apparatus provided by the present disclosure, the current input data includes the image input data, and the determination module is specifically used for:
extracting expression features and/or limb movement features from the image input data;
inputting the expression features and/or limb movement features into a second recommendation model, and outputting, after processing by the second recommendation model, an icon corresponding to the image input data; and
determining the icon to be rendered based on the icon corresponding to the image input data.

According to one or more embodiments of the present disclosure, in the video generating apparatus provided by the present disclosure, the current input data includes both the audio input data and the image input data, and the determination module is specifically used for:
determining icons respectively corresponding to the audio input data and the image input data; and
de-duplicating the icons respectively corresponding to the audio input data and the image input data to obtain the icon to be rendered.

According to one or more embodiments of the present disclosure, in the video generating apparatus provided by the present disclosure, the video generating apparatus further comprises a rendering parameter determination module.

The rendering parameter determination module is configured to determine rendering parameter values corresponding to the icon to be rendered; in which the rendering parameter values include rendering position coordinates, rendering icon size, rendering angle and/or rendering time.

Correspondingly, the rendering module is specifically used for:
rendering, based on the rendering parameter values, the icon to be rendered on the target capturing picture to obtain a capturing effect picture.

According to one or more embodiments of the present disclosure, in the video generating apparatus provided by the present disclosure, the video generating apparatus further comprises a video playing module, a video playing module, and a time adjustment module.

The video playing module is used for playing the target video on a video editing interface;
the display module is used for displaying an editing track corresponding to a target icon on a playing picture in the target video in response to a selecting operation for the target icon;
the time adjustment module is used for adjusting the rendering time of the target icon based on the editing track.

According to one or more embodiments of the present disclosure, in the video generating apparatus provided by the present disclosure, the video generating apparatus further comprises a parameter adjustment module.

The parameter adjustment module is used for adjusting the rendering position coordinates, the rendering icon size and/or the rendering angle of the target icon in response to a preset operation for the target icon on the playing picture.

According to one or more embodiments of the present disclosure, in the video generating apparatus provided by the present disclosure, the video generating apparatus further comprises an authorization acquisition module.

The authorization acquisition module is used for acquiring user authorization information for the current input data of the camera.

According to one or more embodiments of the present disclosure, the present disclosure provides a terminal device comprising a memory, a processor, and a computer program stored in the memory and executable on the processor, wherein the computer program, when executed by the processor, implements any of the video generating methods provided by the present disclosure.

According to one or more embodiments of the present disclosure, the present disclosure provides a computer-readable storage medium having stored a computer program for executing any of the video generating methods provided by the present disclosure.

It should also be noted that in this document, the relational terms such as "first" and "second" are merely used to distinguish one entity or operation from another, and do not necessarily require or imply that there is any such actual relationship or order between these entities or operations. Moreover, the terms "include", "comprise" or any other variation thereof are intended to encompass non-exclusive inclusion, so that a process, method, article or equipment including a series of elements includes not only those elements, but also other elements not explicitly listed or elements inherent to such process, method, article or equipment. Without further limitations, an element defined by phrase "including a ... " does not exclude the existence of other identical elements in the process, method, article or equipment including the said element.

What has been described above is only the specific implementation of the present disclosure, so that those skilled in the art can understand or implement the present disclosure. Many modifications to these embodiments will be obvious to those skilled in the art, and the general principles defined herein can be implemented in other embodiments without departing from the spirit or scope of the present disclosure. Therefore, the present disclosure will not be limited to the embodiments described herein, but is to conform to the widest scope consistent with the principles and novel features disclosed herein.

## Claims

1. A video generating method, comprising:
acquiring current input data of a camera; wherein the current input data comprises audio input data and/or image input data, the audio input data comprises a preset duration of continuous audio frame data with a current input audio frame of the camera as an ending frame, and the image input data comprises a preset number of continuous video frame pictures with a current capturing picture of the camera as the ending frame;
determining an icon to be rendered based on the current input data;
rendering the icon to be rendered on a target capturing picture to obtain a capturing effect picture; wherein the target capturing picture comprises the preset number of continuous video frame pictures with the current capturing picture of the camera as a starting frame; and
generating a target video based on the capturing effect picture.

2. The method according to claim 1, wherein the acquiring current input data of a camera comprises:
acquiring the audio input data and/or the image input data of the camera as the current input data of the camera, in a video recording scenario or a capturing picture previewing scenario of the camera.

3. The method according to claim 1, wherein the current input data comprises the audio input data, and the determining an icon to be rendered based on the current input data comprises:
performing a speech recognition on the audio input data to obtain a speech recognition result;
inputting the speech recognition result into a first recommendation model, and outputting, after processing by the first recommendation model, an icon corresponding to the audio input data; and
determining the icon to be rendered based on the icon corresponding to the audio input data.

4. The method according to claim 1, wherein the current input data comprises the image input data, and the determining an icon to be rendered based on the current input data comprises:
extracting expression features and/or limb movement features from the image input data;
inputting the expression features and/or limb movement features into a second recommendation model, and outputting, after processing by the second recommendation model, an icon corresponding to the image input data; and
determining the icon to be rendered based on the icon corresponding to the image input data.

5. The method according to claim 1, wherein the current input data comprises the audio input data and the image input data, and the determining an icon to be rendered based on the current input data comprises:
determining icons respectively corresponding to the audio input data and the image input data; and
de-duplicating the icons respectively corresponding to the audio input data and the image input data to obtain the icon to be rendered.

6. The method according to claim 1, wherein before the rendering the icon to be rendered on a target capturing picture to obtain a capturing effect picture, the method further comprises:
determining rendering parameter values corresponding to the icon to be rendered; wherein the rendering parameter values comprise rendering position coordinates, a rendering icon size, a rendering angle, and/or a rendering time; and
the rendering the icon to be rendered on a target capturing picture to obtain a capturing effect picture comprises:
rendering, based on the rendering parameter values, the icon to be rendered on the target capturing picture to obtain a capturing effect picture.

7. The method according to claim 1, wherein after the generating a target video based on the capturing effect picture, the method further comprises:
playing the target video on a video editing interface;
displaying, in response to a selecting operation for a target icon on a playing picture in the target video, an editing track corresponding to the target icon; and
adjusting a rendering time of the target icon based on the editing track.

8. The method according to claim 7, wherein the method further comprises:
adjusting rendering position coordinates, a rendering icon size, and/or a rendering angle of the target icon in response to a preset operation for the target icon on the playing picture.

9. The method according to claim 1, wherein before the acquiring current input data of a camera, the method further comprises:
acquiring user authorization information for the current input data of the camera.

10. A video generating apparatus, comprising:
an acquisition module, configured to acquire current input data of a camera; wherein the current input data comprises audio input data and/or image input data, the audio input data comprises a preset duration of continuous audio frame data with a current input audio frame of the camera as an ending frame, and the image input data comprises a preset number of continuous video frame pictures with a current capturing picture of the camera as the ending frame;
a determination module, configured to determine an icon to be rendered based on the current input data;
a rendering module, configured to render the icon to be rendered on a target capturing picture to obtain a capturing effect picture; wherein the target capturing picture comprises the preset number of continuous video frame pictures with the current capturing picture of the camera as a starting frame; and
a video generating module, configured to generate a target video based on the capturing effect picture.

11. A computer-readable storage medium having stored instructions which, when executed on a terminal device, cause the terminal device to implement the video generating method according to any of claims 1-9.

12. A terminal device comprising a memory, a processor, and a computer program stored in the memory and executable on the processor, wherein the computer program, when executed by the processor, cause the processor to implements the video generating method according to any of claims 1-9.

13. A computer program product comprising computer programs/instructions, wherein the computer programs/instructions, when executed by a processor, cause the processor to implement the video generating method according to any of claims 1-9.
